# EUROPÄISCHE PATENTSCHRIFT

(11) **EP 0 319 891 B1**
(45) Veröffentlichungstag und Bekanntmachung des Hinweises auf die Patenterteilung: **08.06.1994**
(21) Anmeldenummer: 88120284.0
(22) Anmeldetag: 05.12.1988
(51) Int. Cl.: H04N 1/23, B41B 25/00

(54) **Vorrichtung zum Erstellen einer Offsetfolie oder einer Filmvorlage zum Belichten einer Offset-Druckplatte**
Apparatus for manufacturing offset foils or films for exposing offset printing plates
Appareil de fabrication de feuilles offset ou de films pour illuminer un cliché offset

(30) Priorität: 07.12.1987 DE 3741357
(43) Veröffentlichungstag der Anmeldung: 14.06.1989
(73) Patentinhaber: ELAPLAN BUCHHOLZ KG, D-24217 Schönberg (DE)
(72) Erfinder: Bröning, Jörg, D-2300 Kiel-Heikendorf (DE); Buchholz, Wolf-Ulrich, D-2306 Schönberg (DE)
(74) Vertreter: Tönnies, Jan G., Dipl.-Ing.

(56) Entgegenhaltungen:
- EP-A- 0 173 032
- US-A- 4 679 153
- PATENT ABSTRACTS OF JAPAN, Band 007-008 (E-152) 13. Oktober 1983;& JP-A-57 166 775 (FUJI SHASHIN FILM K.K.) 14-10-1982
- N.E.C. RESEARCH & DEVELOPMENT, Nr. 82, Juli1986, Seite 110-116, Tokyo, JP; K. YOSHIYAMA et al.: "Digital image layoutsystem for color printing"
- PATENT ABSTRACTS OF JAPAN, Band 010-136 (C-347), 20. Mai 1986;& JP-A-60 260 545 (FUJI XEROX K.K.) 23-12-1985

## Beschreibung

Die Erfindung betrifft eine Vorrichtung zum Erstellen einer Filmvorlage zum Belichten einer Offset-Druckplatte oder dergleichen, mit einem Desk-Top-Publishing-System (DTP), bestehend aus ggf. einem Scanner, einem Personal-Computer oder dergleichen und einem Laserprinter, wobei der Laserprinter aus einer das von dem Personal-Computer abgegebene DTP-Videosignal in zeilenweise angeordnete, die Laserdiode ansteuernde Modulationssignal umwandelnde Steuereinheit und einer den Laserstrahl erzeugende und periodisch ablenkenden Lasereinheit besteht.

Desk-Top-Publishing-System (DTP) finden zunehmend Verwendung. Sie ermöglichen es, eine Druckvorlage aus Text und Bildern unter Verwendung eines Personal-Computers oder dergleichen zusammenzusetzen. Dabei sind die üblichen DTP-Systeme mit einem Scanner zum Abtasten eines Bildes, einer Tastatur zum Eingeben und Anordnen des Textes sowie einem Laser-Printer zum Ausgeben der erstellten Druckvorlage auf Papier versehen.

Um die Druckvorlage im Offsetdruck zu vervielfältigen, muß von dieser Druckvorlage ein Negativ in Größe des Drucks erstellt werden. Zu diesem Zweck wird bisher die von dem Laserprinter erstellte Druckvorlage abfotografiert und ein Negativfilm in der erforderlichen Größe erstellt.

Das übliche Verfahren hat den Nachteil, daß die vom Laser-Printer auf Papier erstellte Druckvorlage Randunschärfen aufweist, die sich auf die Schärfe der Filmvorlage auswirken.

Dokument US-A-4 679 153 offenbart eine Vorrichtung zum Erstellen von Druckfilmvorlagen, wobei das in einem Computersystem gespeicherte Bild auch auf einem Laserdrucker ausgegeben werden kann.

Der Erfindung liegt die Aufgabe zugrunde, eine Vorrichtung zu schaffen, die es ermöglicht, eine Filmvorlage zum Belichten einer Offset-Druckplatte zu erstellen, bei der die auf der Unschärfe der von dem Laserprinter gedruckten Papiervorlage beruhende Unschärfe vermieden wird.

Erfindungsgemäß wird diese Aufgabe gelöst durch eine der Lasereinheit des Laserprinters entsprechende, zu dieser parallel geschaltete zweite Lasereinheit und eine ein lichtempfindliches Material an der Belichtungseinheit vorbei fördernde Filmtransporteinrichtung.

Weiter wird vorgeschlagen, daß die zweite Lasereinheit eine Infrarot-Lasereinheit ist und das Filmmaterial infrarotlichtempfindliches Material ist. Dies hat den Vorteil, daß eine bei Laser-Printern eingesetzte Infrarot-Lasereinheit praktisch unverändert eingesetzt werden kann.

Die Erfindung wird im folgenden anhand einer schematischen Zeichnung erläutert.

Das Desk-Top-Publishing-System besteht aus einem Scanner 10, einem Personal-Computer 12 und einem Laser-Printer 14. Der Personal-Computer 12 ist mit einer Software geladen, die ein Desk-Top-Publishing ermöglicht, also ein Gestalten einer Druckvorlage auf dem Bildschirm des Personal-Computers. Bildanteile der zu erstellenden Druckvorlage werden mit Hilfe des Scanners abgetastet und in den Personal-Computer eingegeben. Texte werden über die Tastatur des Personal-Computers eingelesen. Weiter können ein Digitalisierbrett und/oder eine "Maus" vorgesehen sein.

Die auf dem Personal-Computer in üblicher Weise gestaltete Druckvorlage kann auf einem Laser-Printer 14 ausgegeben werden, der aus einer die DTP-Videosignale in zur Ansteuerung einer Laserdiode geigneten Modulationsignale umwandelnden Steuereinheit 14a, einer den Laserstrahl steuernde und ablenkenden Lasereinheit 14b und einer Trommeleinheit 14c besteht.

Erfindungsgemäß wird vorgeschlagen, die Signale, die in der Steuereinheit 14a erzeugt werden und die Laserdiode der Lasereinheit 14b ansteuern, abzugreifen und auf eine zweite, weitgehend oder völlig identisch aufgebaute Lasereinheit 16 aufzugeben. Diese zweite Lasereinheit 16 wirkt auf ein Filmmaterial, das von einer Filmtransporteinrichtung 18 an der zweiten Lasereinheit 16 vorbeigeführt wird.

Ein Umschalter 20 ermöglicht es, die Modulationssignale wahlweise auf die auf das Papier wirkende Lasereinheit 14b des Laserprinters 14 zu geben, oder aber auf die zweite Lasereinheit 16, die auf das lichtempfindliche Filmmaterial wirkt.

Bei Betreiben der zweiten Lasereinheit 16 belichtet der von dieser erzeugte Laserstrahl direkt eine Offsetfolie oder aber einen Film, der nach Entwicklung unmittelbar zur Erstellung der Offset-Platte verwendet werden kann. Da der Umweg über die von Laserprinter auf Papier erstellte, unvermeidliche Randunschärfen aufweisende Hardcopy vermieden wird, ist eine hohe Schärfe der mit der erfindungsgemäß vorgeschlagenen Vorrichtung erstellten Filmvorlage gewährleistet.

Die erfindungsgemäß vorgeschlagene Vorrichtung macht sich den Umstand zunutze, daß der Laserstrahl, der zur Erstellung einer Wiedergabe auf Papier auf eine Trommel wirkt und dort die zunächst positiv aufgeladene Trommel entlädt, so daß ein latentes elektrostatisches Bild auf der Trommel gespeichert wird, zur Erstellung der Filmvorlage unmittelbar zur Belichtung eines lichtempfindlichen Filmmaterials verwendet werden kann. Der ausgegebene Film ist - ohne weitere Veränderung - ein Negativ. Es ist auf diese Weise bei geringem Kostenaufwand möglich, einen zur Belichtung einer Offset-Platte dienenden Film oder ein Offsetfolienmaterial bei Einsatz eines DTP-Systems zu erstellen.

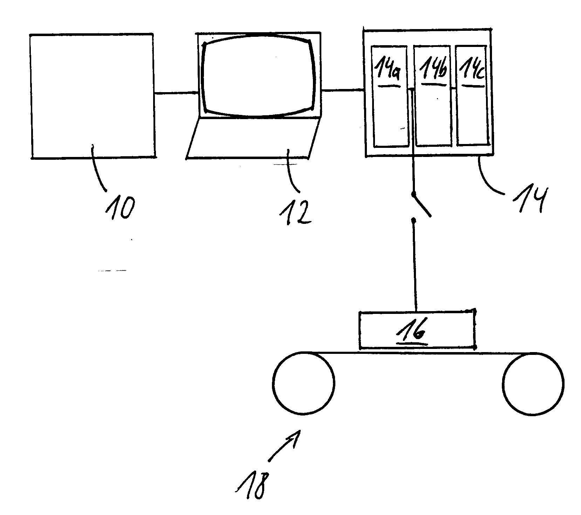

## Patentansprüche

1. Vorrichtung zum Erstellen einer Offsetfolie oder einer Filmvorlage zum Belichten einer Offset-Druckplatte oder dergleichen, mit einem Desk-Top-Publishing-System (DTP), bestehend aus einem Personal-Computer (12) oder dergleichen, einem Laserprinter (14) und ggf. einem Scanner (10), wobei der Laserprinter (14) aus einer das von dem Personal-Computer (12) abgegebene DTP-Videosignal in zeilenweise angeordnete, die Laserdiode ansteuernde Modulationssignal umwandelnde Steuereinheit (14a) und einer den Laserstrahl erzeugende und periodisch ablenkenden Lasereinheit (14b) besteht, gekennzeichnet durch eine der Lasereinheit (14b) des Laserprinters (14) entsprechende, zu dieser parallel geschaltete zweite Lasereinheit die von der Steuereinheit der ersten Lasereinheit angesteuert wird, (16) und eine ein lichtempfindliches Material an der zweiten Lasereinheit (16) vorbei fördernde Filmtransporteinrichtung (18).

2. Vorrichtung nach Anspruch 1, dadurch gekennzeichnet, daß die zweite Lasereinheit (16) eine Infrarot-Lasereinheit ist und das Filmmaterial infrarotlichtempfindliches Material ist.

## Claims

1. Apparatus for producing an offset foil or a film master for exposing an offset printing plate or the like, with a desk top publishing system (DTP), comprising a personal computer (12) or the like, a laser printer (14) and optionally a scanner (10), the laser printer (14) comprising a control unit (14a) converting the DTP video signal delivered by the personal computer (12) into a linewise-arranged modulation signal controlling the laser diode and a laser unit (14b) producing and periodically deflecting the laser beam, characterized by a laser unit (16), controlled by the control unit of the first laser unit, corresponding to the laser unit (14b) of the laser printer (14) and connected in parallel thereto, and a film transport device (18) feeding a photosensitive material past the second laser unit (16).

2. Apparatus according to claim 1, characterized in that the second laser unit (16) is an infrared laser unit and the film material is infrared light- sensitive material.

## Revendications

1. Dispositif de production d'une feuille offset ou d'un typon pour exposer un cliché d'offset ou analogue, avec un système de publication assisté par ordinateur (PAO), composé d'un ordinateur individuel (12) ou analogue, d'une imprimante laser (14) et, le cas échéant, d'un scanner (10), l'imprimante laser (14) étant composée d'une unité de commande (14a), convertissant les signaux de modulation destinés à la commande de la diode laser et disposée en ligne quant aux signaux vidéo de PAO envoyés par l'ordinateur individuel (12), et d'une unité laser (14b), produisant le rayon laser et produisant une déviation périodique, caractérisé par une deuxième unité laser (16), correspondant à l'unité laser (14b) de l'imprimante laser (14), branchée en parallèle par rapport à celle-ci et commandée par l'unité de commande de la première unité laser, et par un dispositif de transport de film (18), faisant passer un matériau photosensible sur la deuxième unité laser (16).

2. Dispositif selon la revendication 1, caractérisé en ce que la deuxième unité laser (16) est une unité à laser infrarouge et le matériau du film est un matériau sensible aux infrarouges.
